# EUROPÄISCHE PATENTSCHRIFT

(11) **EP 0 326 839 B1**
(45) Veröffentlichungstag und Bekanntmachung des Hinweises auf die Patenterteilung: **31.03.1993**
(21) Anmeldenummer: 89100649.6
(22) Anmeldetag: 16.01.1989
(51) Int. Cl.: F16K 3/08, F16K 27/04

(54) **Dichtungsanordnung mit einer ringförmigen, elastisch verformbaren Dichtung und Verwendung der Dichtungsanordnung**
Sealing system with an annular, elastic and deformable sealing and its application
Dispositif d'étanchéité avec bague annulaire, élastique et déformable et son application

(30) Priorität: 27.01.1988 CH 280/88
(43) Veröffentlichungstag der Anmeldung: 09.08.1989
(73) Patentinhaber: KWC AG, CH-5726 Unterkulm (CH)
(72) Erfinder: Hochstrasser, Ferdinand, CH-5105 Auenstein (CH)
(74) Vertreter: Patentanwälte Schaad, Balass, Menzl & Partner AG

(56) Entgegenhaltungen:
- EP-A- 0 071 779
- CH-A- 651 365
- FR-A- 1 180 610
- FR-A- 2 495 266

## Beschreibung

Die vorliegende Erfindung betrifft eine Dichtungsanordnung mit einer ringförmigen, elastisch verformbaren Dichtung gemäss dem Oberbegriff des Anspruchs 1 sowie die Verwendung einer solchen Dichtungsanordnung.

Solche Dichtungsanordnungen sind beispielsweise aus dem Armaturenbau und der Installationstechnik für Wasserverteilanlagen in Häusern bekannt. Sie können überall dort Verwendung finden, wo zwei in Strömungsrichtung aufeinander ausgerichtete Oeffnungen, die von parallel zueinander angeordneten Dichtungsflächen begrenzt werden, abgedichtet werden müssen. Bei solchen bekannten Dichtungsanordnungen werden üblicherweise O-Ringe oder ringförmige Dichtungen mit beispielsweise rechteckigem Querschnitt eingesetzt, deren stirnseitige Dichtflächen an den die Oeffnungen begrenzenden Dichtungsflächen anliegen. Bei solchen Dichtungsanordnungen muss die Dichtung unter einem erheblichen Druck in Axialrichtung gehalten werden, damit die stirnseitigen Dichtflächen genügend dichten. Es sind auch ringförmige Lippendichtungen bekannt, mit welchen auch bei geringen axialen Vorspannungen gute Dichtverhältnisse erzielt werden können. Diese Lippendichtungen weisen im Bereich der Stirnseiten angeordnete gegen innen vorstehende dünnwandige Lippen auf, welche in Abhängigkeit von Druck des Mediums an die Dichtungsflächen, welche die Oeffnungen begrenzen, angepresst werden (z.B. CH-A-651 365).

Weiter sind Wasserhähne bekannt, welche einen Unterteil und einen bis zu einem Anschlag in diesen eingechraubten Oberteil aufweisen. Im Oberteil ist eine Scheibe mit einer Durchlassöffnung drehfest angeordnet, und an ihr liegt eine drehbar gelagerte, ebenfalls mit einer Durchlassöffnung versehene Drehscheibe an. Die Drehscheibe ist mittels eines Betätigungselementes drehbar, so dass die Durchlassöffnung der Drehscheibe mit der Durchlassöffnung der Scheibe in und ausser Uberlappung gebracht werden kann. In Strömungsrichtung des Mediums gesehen, ist bezüglich der Scheibe stromaufwärts eine ringförmige Dichtung mit einem rechteckigen Querschnitt angeordnet, welcher mit der einen stirnseitigen Dichtfläche an der Scheibe anliegt und sich mit der andern stirnseitigen Dichtfläche an einer Dichtungsfläche des Unterteils abstützt. Die Dichtung muss nun herstellungsbedingte Toleranzen des Abstandes zwischen der Scheibe und der Dichtungsfläche aufzunehmen im Stand sein Sie muss aber auch beim grösstmöglichen Abstand so stark gepresst sein, dass die Scheibe mit genügend grosser Kraft gegen die Drehscheibe gedrückt wird, damit der geschlossene Hahn dicht ist. Dies erfordert eine Dimensionierung der Dichtung, die bei minimalem Abstand zwischen der Scheibe und der Dichtungsfläche zu einer bleibenden Verformung der aus Gummi gefertigten Dichtung führen kann. Ueberdies wird die Scheibe dabei mit einer viel grösseren Kraft als notwendig gegen die Drehscheibe gepresst, was zu gegenseitigem Anfressen führen kann, wodurch die Funktionstüchtigkeit des Wasserhahns nicht mehr gegeben ist.

Um diese Probleme zu lösen und die Anpassung an unterschiedliche Unterteile zu gewährleisten schlägt die FR-A1-2 495 266 vor, die Dichtung im an den Unterteil angrenzenden Bereich in radialer Richtung so zu dimensionieren, dass sie dem maximalen Unterschied der Dichtungsfläche der verschiedenen Unterteile entspricht, und im an die Scheibe angrenzenden Bereich schlanker auszubilden, so dass die Dichtung in axialer Richtung die Eigenschaften einer weichen Feder aufweist. Um die Federeigenschaften zu verbessern, kann die Dichtung eine aussen umlaufende Einkerbung aufweisen.

Ausgehend vom letztgenannten Stand der Technik ist es Aufgabe der vorliegenden Erfindung, eine Dichtungsanordnung mit einer ringförmigen, elastisch verformbaren Dichtung mit stirnseitigen Dichtflächen zu schaffen, die bei möglichst kleiner bleibender Verformung grosse Toleranzunterschiede ausgleichen kann und die trotz geringer axialer Vorspannung gute Dichteigenschaften aufweist und einfach aufgebaut ist. Weiter soll eine Verwendung einer solchen Dichtungsanordnung vorgeschlagen werden.

Diese Aufgabe wird durch eine gattungsgemässe Dichtungsanordnung gelöst, die die Merkmale des kennzeichnenden Teiles des Anspruchs 1 aufweist.

Bei einer solchen Dichtungsanordnung kann die ringförmige, elastisch verformbare Dichtung mit kleiner axialer Vorspannung montiert werden. Der vom Medium auf die innenliegende Seite der Dichtung ausgeübte Druck wird infolge der gegen Aussen vorstehenden Stützrippen, welche sich an einem Stützring abstützen, in eine axiale Kraft umgesetzt, was zur Folge hat, dass die stirnseitigen Dichtflächen an den entsprechenden Dichtungsflächen mit einer vom Druck des Mediums abhängigen Flächenpressung anliegen. Dies führt auch zu einer vernachlässigbar kleinen, bleibenden Verformung, weil die Flächenpressung der Dichtflächen nicht durch Vorspannen des elastischen Materials der Dichtung selber aufgebracht werden muss, sondern vom Druck des Mediums erzeugt wird. Der innere Ring gewährleistet auch bei sehr kleinen Drücken oder auch bei Unterdruck eine sichere Anpressung der Dichtflächen.

Die Wirkungsweise der oben angegebenen Dichtungsanordnung wird noch dadurch verbessert, dass die Stützrippen zusammen mit dem sie umgreifenden Stützring ein Luftpolster einschliessen. Infolge des auf die innenliegende Seite der Dichtung ausgeübten Drucks des fliessfähigen Mediums wird der Druck im Luftpolster erhöht, was die Flächenpressung der stirnseitigen Dichtflächen zusätzlich proportional zum Druck des Mediums erhöht.

Eine solche Dichtungsanordnung führt bei der Verwendung in einem Hahn, insbesondere gemäss Anspruch 9, zu erheblichen Vorteilen. So ist bei geschlossenem Hahn infolge des statischen Wasserdrucks die Presskraft auf die Dichtflächen und somit auf die aneinander anliegenden Scheibe und Drehscheibe am grössten. Sobald nun der Hahn wenig geöffnet wird, nimmt der Wasserdruck ab, was eine sofortige Reduzierung der Presskraft auf die Dichtflächen sowie auf die aneinander anliegenden Scheibe und Drehscheibe hervorruft. Dies verhindert ein, Anfressen der Drehscheibe an der Scheibe, garantiert aber trotzdem eine gute Dichtheit. Weiter können grosse Toleranzen aufgenommen werden, weil die minimal notwendige Vorspannung sehr gering ist.

Bevorzugte Ausführungsformen der Dichtungsanordnung sowie deren bevorzugte Verwendung sind in den abhängigen Ansprüchen angegeben.

Die Erfindung wird nun anhand der Zeichnung näher erläutert. Es zeigen rein schematisch:
- Fig. 1: einen Keramik-Oberteil eines bekannten Hahns in einem Schnitt entlang der Drehachse des Betätigungsgliedes;
- Fig. 2 und 3: in Ansicht in Pfeilrichtung II der Fig. 1, die zwei aneinander anliegenden Keramikscheiben im geschlossenen und teilweise geöffneten Zustand des Hahns; und
- Fig. 4 und 5: in vergrösserter Darstellung gegenüber Fig. 1, zwei mögliche Ausbildungsformen der Dichtungsanordnung in einem Hahn gemäss Fig. 1.

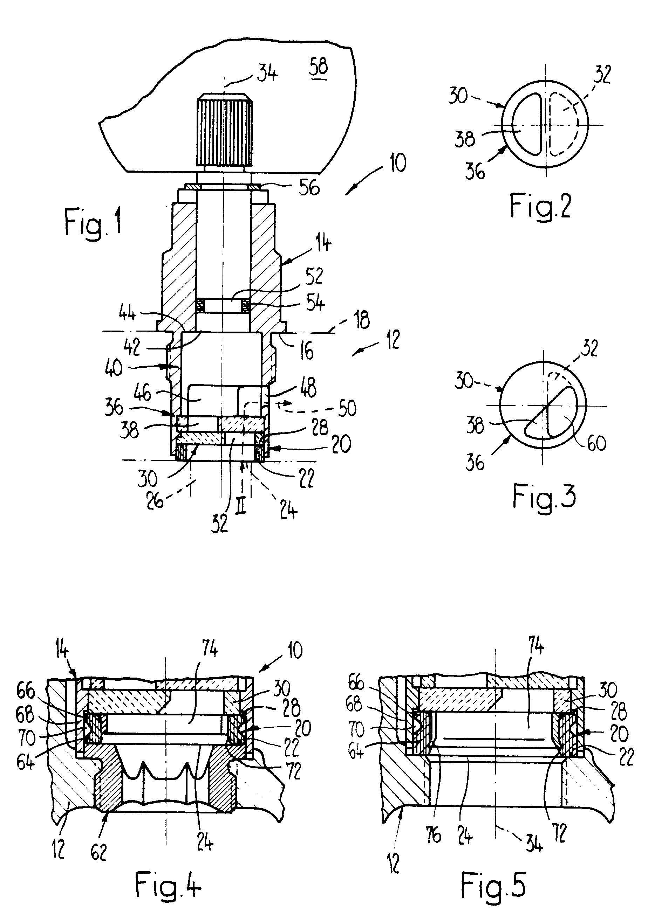

Fig. 1 zeigt in einem Längsschnitt einen Keramik-Oberteil 10 eines Wasserhahnes, welcher in einen strichpunktiert angedeuteten Unterteil 12 eingeschraubt ist. Das Gehäuse 14 des Keramik-Oberteils 10 weist einen Anschlag 16 auf, welcher an der Oberseite 18 des Unterteils 12 ansteht. Im unteren Endbereich des Keramik-Oberteils 10 ist eine ringförmige Dichtung 20 mit einem rechteckigen Querschnitt vorgesehen, welche gegen unten über das Gehäuse 14 vorsteht. Die eine stirnseitige Dichtfläche 22 der Dichtung 20 liegt an einer ringförmigen Dichtungsfläche 24 des Unterteils 12 an, welche eine Zuflussöffnung 26 für das Wasser begrenzt. Die andere stirnseitige Dichtfläche 28 der Dichtung 20 drückt gegen eine im Gehäuse 14 drehfest gelagerte Scheibe 30 aus keramischem Material, welche eine exzentrisch angeordnete Durchlassöffnung 32 aufweist. Die Scheibe 30 liegt an einer um die Achse 34 drehbar gelagerten Drehscheibe 36 aus keramischem Material an, welche ebenfalls eine exzentrisch angeordnete Durchlassöffnung 38 aufweist. Die Drehscheibe 36 ist mit einem Betätigungsglied 40 drehfest verbunden, welches sich gegen die Kraft der Dichtung 20 mittels einer Anschlagfläche 42 an einem Absatz 44 des Gehäuses 14 abstützt. Im Bereich der Drehscheibe 36 ist im Betätigungsglied 40 eine Umlenkausnehmung 46 vorgesehen, um das durch die Zuflussöffnung 26 und die beiden Durchlassöffnungen 32, 38 fliessende Wasser einer im Gehäuse 14 angeordneten Abflussöffnung 48 zuzuleiten. Die Strömungsrichtung des Wassers ist mit einem gestrichelten Pfeil angedeutet und mit 50 bezeichnet.

Oberhalb der Anschlagfläche 42 ist im Betätigungsglied 40 eine umlaufende Dichtungsnut 52 vorgesehen, in welcher eine O-Ringdichtung angeordnet ist. Mittels einer Seeger-Ringsicherung 56 ist das Betätigungsglied 40 gegen Verschiebung in Richtung der Achse 34 gesichert. Im oberen Endbereich sitzt auf dem Betätigungsglied 40 ein Drehknopf 58.

Die Fig. 2 und 3 zeigen in Ansicht, in Richtung des Pfeiles II der Fig. 1, die Drehscheibe 36 und Scheibe 30 in einer Zu- bzw. teilweisen Offenstellung des Wasserhahns. In der Fig. 2 sind die beiden Druchlassöffnungen 32, 38 ausser Ueberlappung, so dass der Wasserstrom in Richtung des Pfeiles 50 (siehe Fig. 1) unterbrochen ist. In der Fig. 3 ist die Drehscheibe 36 in einer gegenüber der Fig. 2 verdrehten Lage dargestellt, so dass sich die beiden Durchlassöffnungen 32, 38 teilweise überlappen und einen Strömungsquerschnitt 60 für das Wasser freigeben.

Da der Abstand zwischen der Oberseite 18 des Unterteils 12 und der Dichtungsfläche 24 sowie der Keramik-Oberteil 10 Herstellungstoleranzen unterworfen sind, wird die Dichtung 20 beim Einschrauben des Keramik-Oberteils 10 in den Unterteil 12 bis der Anschlag 16 an der Oberseite 18 ansteht, unterschiedlich gepresst. Der Unterschied der Pressung kann 0,5 mm übersteigen. Die Dichtung muss nun so dimensioniert sein, dass sie auch bei minimaler Pressung die Scheibe 30 mit einer vorgegebenen Minimalkraft gegen die Drehscheibe 36 drückt, um ein tropffreies Unterbrechen der Wasserströmung zu garantieren. Dies hat nun zur Folge, dass bei maximaler Pressung der Dichtung 20 die Scheibe 30 mit wesentlich grösserer Kraft gegen die Drehscheibe 36 gedrückt wird, was zum Anfressen der Scheibe 30 an der Drehscheibe 36 und somit zur Funktionsuntüchtigkeit des Wasserhahnes führen kann. Weiters kann die maximale Pressung zu einer zur alterungsbedingten, zusätzlichen, bleibenden Verformung führen. Es ist zu beachten, dass die Scheibe 30 bei geschlossenem Wasserhahn mit dem statischen Druck des Wassers beaufschlagt ist, was ein Anfressen der Scheibe 30 an der Drehscheibe 36 zusätzlich fördert.

Zwei mögliche Ausbildungsformen einer Dichtungsanordnung, die die erwähnten Probleme der bekannten Dichtung 20 lösen, sind in den Fig. 4 und 5 angegeben. Diese Figuren zeigen den Bereich um die Dichtung 20 der Fig. 1 in vergrössertem Massstab.

In dem in der Fig. 4 dargestellten Unterteil 12 ist ein Ventilsitz 62 mit der Dichtungsfläche 24 eingeschraubt. An der Dichtungsfläche 24 liegt die eine stirnseitige Dichtfläche 22 der Dichtung 20 an, deren andere Dichtfläche 28 gegen die drehfeste Scheibe 30 drückt. Im Bereich der stirnseitigen Dichtflächen 22, 28 weist die Dichtung 20 in radialer Richtung gegen aussen vorstehende, umlaufende Stützrippen 64, 66 auf, welche sich an einem am Gehäuse 14 des Keramik-Oberteils 10 ausgebildeten Stützring 68 abstützen. Die Stützrippen 64, 66 begrenzen eine V-förmige Umfangsnut 70 und schliessen zusammen mit dem Stützring 68 ein Luftpolster ein. Auf der innenliegenden Seite ist die Dichtung 20 mit einer zylinderförmigen Oberfläche 72 versehen, welche in den Bereichen der stirnseitigen Dichtflächen 22, 28 gerundet ist. An der Oberfläche 72 liegt ein geschlitzter Federring 74 an.

Die Dichtungsanordnung gemäss Fig. 5 ist der Dichtungsanordnung gemäss Fig. 4 sehr ähnlich. Die Dichtungsfläche 24 ist hier am Unterteil 12 ausgebildet. An ihr liegt die eine stirnseitige Dichtfläche 22 der Dichtung 20 an, deren andere stirnseitige Dichtfläche 28 wiederum gegen die Scheibe 30 drückt. Die umlaufenden, radial gegen aussen vorstehenden Stützrippen 64, 66 liegen ebenfalls am Stützring 68 an. Es ist zu beachten, dass die Stützrippe 64 in Richtung der Achse 34 breiter ausgebildet ist, als die entsprechende Stützrippe 64 der Dichtung 20 der Fig. 4. Der Stützring 68 umfasst die Stützrippe 64 bis ungefähr in deren Mittelbereich. Die innenliegende zylindrische Oberfläche 72 weist eine Rastnut 76 für den geschlitzten Federring 74 auf. Das der Rastnut 76 entfernte Ende des Federrings 74 liegt an der Scheibe 30 an.

Die Dichtungsanordnungen gemäss Fig. 4 und 5 funktionieren wie folgt: Die Dichtungen 20 sind so dimensioniert, dass die bei der durch die Herstellungstoleranzen des Hahnes gegebenen minimalen Pressung mit sehr kleiner Kraft gegen die Dichtungsfläche 24 bzw. Scheibe 30 drücken. Dabei presst die Federring 74 die Stützrippen 64, 66 gegen den Stützring 68 und sorgt dafür, dass auch bei eventuellem Unterdruck die Stützrippen 64, 66 am Stützring 68 anliegen. Die Stützrippen 64, 66 lenken die vom Federring 74 auf die Dichtung 20 ausgeübte Kraft in Richttung der Achse 34 um, so dass die Presskraft auf die stirnseitigen Dichtflächen 22, 28 nicht alleine durch Zusammendrücken der elastisch verformbaren Dichtung 20 aufgebracht werden muss. Steht nun Wasserdruck an, so werden die Stützrippen 64, 66 mit entsprechend grösserer Kraft gegen den Stützring 64 gepresst. Die Kraftumlenkung in der Dichtung 20 hat nun zur Folge, dass die Kraft, mit welcher die stirnseitigen Dichtflächen 22, 28 gegen die Dichtungsfläche 24 bzw. die Scheibe 30 gedrückt werden, ungefähr proportional zum Druck des Wassers zunimmt. Durch die Verformung der Dichtung 20 wird auch das Luftpolster in der Umfangsnut 70 leicht komprimiert, was zur Folge hat, dass die Anpresskraft der stirnseitigen Dichtflächen 22, 28 nochmals erhöht wird. Zusammenfassend kann gesagt werden, dass die Presskraft auf die stirnseitigen Dichtflächen 22, 28 sich im wesentlichen aus einem konstanten, relativ kleinen von der Vorspannung bei der Montage verursachten Anteil und einem dem Wasserdruck proportionalen Anteil zusammensetzt.

Da nun die Dichtung 20 selber nur eine sehr kleine Presskraft auf die stirnseitigen Dichtflächen 22, 28 aufbringen muss, kann sie so dimensioniert werden, dass sie bei maximal möglichem Zusammendrücken infolge der Herstellungstoleranzen keiner bleibenden Verformung, ausser der alterungsbedingten, unterworfen ist. Des weitern wird die Scheibe 30 mit einer gegenüber bekannten Wasserhähnen wesentlich kleineren Kraft gegen die Drehscheibe 36 gedrückt, was die Gefahr für ein Anfressen wesentlich vermindert. Ueberdies ist zu beachten, dass bei der vorgeschlagenen Dichtungsanordnung die Kraft auf die Scheibe 30 verkleinert wird, sobald das Wasser zu fliessen beginnt, weil die Dichtung auf den Unterschied zwischen dem statischen und dynamischen Wasserdruck reagiert, was die Gefahr des Anfressens nochmals verringert.

Für den Fachmann ist es klar, das die Stützrippen 64, 66 derart dimensioniert sind, dass sie unter dem Druck des Wassers nicht knicken. Sie können auch eine andere Form aufweisen, als dies in den Fig. 4 und 5 angegeben ist. So können sie beispielsweise auch eine U-förmige Umfangsnut 70 begrenzen.

Der innere Ring muss nicht zwingend als Federring 74 ausgebildet sein, er muss nur garantieren, dass auch bei Unterdruck die Stützrippen 64, 66 am Stützring 68 anliegen. Ein Federring 74 hat allerdings den Vorteil, dass der Wasserdruck besser ausgenützt werden kann, weil sein Durchmesser veränderbar ist. Der innere Ring bzw. Federring 74 kann auch mittels an der Dichtung 20 angeordneten Rastnasen gehalten werden.

Die erfindungsgemässe Dichtungsanordnung ist zusammen mit einem Wasserhahn näher erläutert worden. Sie kann aber auch in andern Armaturen oder überall dort verwendet werden, wo zwei Teile mit in Strömungsrichtung zueinander ausgerichteten Strömungskanälen stirnseitig gegeneinander abgedichtet werden müssen, dabei ist zu beachten, dass der Stützring 68 nicht zwingend an einem dieser Teile ausgebildet sein muss. Der Stützring 68 kann als selbstständiger Ring die Dichtung 54 umgreifen.

## Patentansprüche

1. Dichtungsanordnung mit einer elastisch verformbaren und von einem fliessfähigen Medium, insbesondere Wasser, durchflossenen ringförmigen Dichtung (20) mit stirnseitigen Dichtflächen (22,28) und benachbart zu den Stirnseiten angeordneten, in radialer Richtung nach aussen gegenüber der äusseren Mantelfläche abstehenden, umlaufenden Stützrippen (64,66), wobei die Dichtung sich in radialer Richtung ausschliesslich mit den Stützrippen (64,66) an einem, insbesondere etwa zylinderförmigen Stützring (68) abstützt und durch mit den Dichtflächen (22,28) zusammenwirkende Gegenflächen (24,30) in axialer Richtung gehalten ist, dadurch gekennzeichnet, dass an der radial innenliegenden Seite (72), sich in axialer Richtung gesehen im Bereich zwischen den beiden Stützrippen (64,66) ein innerer Ring (74) erstreckt und unter Vospannung an der Dichtung (20) anliegt.

2. Dichtungsanordnung nach Anspruch 1, dadurch gekennzeichnet, dass die Stützrippen (64,66) eine im wesentlichen V-förmige oder U-förmige Umfangsnut (70) begrenzen.

3. Dichtungsanordnung nach Anspruch 1 oder 2, dadurch gekennzeichnet, dass die Dichtung (20) auf der innenliegenden Seite (72) eine im wesentlichen zylinderförmige Oberfläche aufweist und der innere Ring (74) etwa hohlzylinderförmig ausgebildet ist.

4. Dichtungsanordnung nach einem der Ansprüche 1 bis 3, dadurch gekennzeichnet, dass der innere Ring (74) federnd ausgebildet ist.

5. Dichtungsanordnung nach Anspruch 4, dadurch gekennzeichnet, dass der innere Ring ein geschlitzter Federring (74) ist.

6. Dichtungsanordnung nach einem der Ansprüche 1 bis 5, dadurch gekennzeichnet, dass die Dichtung (20) auf der innenliegenden Seite (72) mindestens eine Rastnut (76) oder Rastnase für den inneren Ring (74) aufweist.

7. Dichtungsanordnung nach einem der Ansprüche 1 bis 6, dadurch gekennzeichnet, dass die Stützrippen (64,66) über den gesamten Aussenumfang der Dichtung (20) verlaufen, und die Dichtung (20) mit ihren Stützrippen (64,66) und der Stützring (68) eine luftdicht abgeschlossene, luftgefüllte Kammer begrenzen, um ein komprimierbares Luftpolster zu bilden.

8. Verwendung einer Dichtungsanordnung nach einem der Ansprüche 1 bis 7 in einem Hahn, insbesondere Wasserhahn.

9. Verwendung nach Anspruch 8, wobei der Hahn einen Unterteil (12) und einen an diesem angeordneten Oberteil (10) mit einer drehfesten, mit mindestens einer Durchlassöffnung (32) versehenen Scheibe (30) und mit einer drehbar gelagerten an der Scheibe (30) anliegenden Drehscheibe (36) mit ebenfalls mindestens einer Durchlassöffnung (38), welche mittels eines Betätigungselementes (40) mit der Durchlassöffnung (32) der Scheibe (30) in und ausser Uberlappung bringbar ist, aufweist, und wobei die Dichtung (20) der in Strömungsrichtung (50) des Mediums gesehen bezüglich der Scheibe (30) stromaufwärts angeordneten Dichtungsanordnung (20,68,74) mit der einen Dichtfläche (28) an der Scheibe (30) und mit der anderen Dichtfläche (22) an einer am Unterteil (12) angeordneten Dichtungsfläche (24) anliegt.

10. Verwendung nach Anspruch 9, dadurch gekennzeichnet, dass die Scheibe (30) und die Drehscheibe (36) aus keramischem Material bestehen.

11. Verwendung nach Anspruch 9 oder 10, dadurch gekennzeichnet, dass die Dichtungsfläche (24) an einem in den Unterteil (12) eingeschraubten Ventilsitz (62) ausgebildet ist.

12. Verwendung nach einem der Ansprüche 9 bis 11, dadurch gekennzeichnet, dass der Stützring (68) am Oberteil (10) oder am Unterteil (12) ausgebildet ist.

## Claims

1. Sealing device having an annular seal (20), which is elastically deformable and is flowed through by a free-flowing medium, in particular water, having frontal sealing surfaces (22, 28) and circumferential supporting ribs (64, 66), disposed adjacent to the front faces and protruding in the radial direction outwards in relation to the outer lateral surface, the seal being supported in the radial direction exclusively by the supporting ribs (64, 66) against a - in particular approximately cylindrical - supporting ring (68) and being held in the axial direction by counter-surfaces (24, 30) interacting with the sealing surfaces (22, 28), characterised in that, on the radially inner side (72), viewed in the axial direction, an inner ring (74) extends in the area between the two supporting ribs (64, 66) and bears under pre-tension against the seal (20).

2. Sealing device according to Claim 1, characterised in that the supporting ribs (64, 66) limit an essentially V-shaped or U-shaped peripheral groove (70).

3. Sealing device according to Claim 1 or 2, characterised in that the seal (20) exhibits on the inner side (72) an essentially cylindrical surface and the inner ring (74) is of approximately hollow-cylindrical configuration.

4. Sealing device according to one of Claims 1 to 3, characterised in that the inner ring (74) is of resilient configuration.

5. Sealing device according to Claim 4, characterised in that the inner ring is a slotted spring ring (74).

6. Sealing device according to one of Claims 1 to 5, characterised in that the seal (20) exhibits on the inner side (72) at least one latch groove (76) or latch boss for the inner ring (74).

7. Sealing device according to one of Claims 1 to 6, characterised in that the supporting ribs (64, 66) run over the entire outer periphery of the seal (20) and the seal (20) together with its supporting ribs (64, 66) and the supporting ring (68) limit an airtight-sealed, air-filled chamber, thereby forming a compressible air-cushion.

8. Use of a sealing device according to one of Claims 1 to 7 in a tap, in particular a water tap.

9. Use according to Claim 8, the tap exhibiting a bottom part (12) and a top part (10) disposed thereon, having a rotationally secure disc (30), provided with at least one pass-through opening (32), and having a rotatably mounted rotary disc (36), bearing against the disc (30) and similarly having at least one pass-through opening (38) which can be brought, by means of an actuating element (40), into and out of overlap with the pass-through opening (32) of the disc (30), and the seal (20) of the sealing device (20, 68, 74) which is disposed upstream in relation to the disc (30), viewed in the direction of flow (50) of the medium, bearing with the one sealing surface (28) against the disc (30) and with the other sealing surface (22) against a sealing surface (24) disposed on the bottom part (12).

10. Use according to Claim 9, characterised in that the disc (30) and the rotary disc (36) consist of a ceramic material.

11. Use according to Claim 9 or 10, characterised in that the sealing surface (24) is configured on a valve seat (62) screwed into the bottom part (12).

12. Use according to one of Claims 9 to 11, characterised in that the supporting ring (68) is configured on the top part (10) or on the bottom part (12).

## Revendications

1. Dispositif d'étanchéité avec un joint d'étanchéité (20) annulaire, déformable élastiquement et parcouru par l'écoulement d'un milieu fluide, en particulier de l'eau, avec des faces d'étanchéité frontale (22,28) et des nervures d'appui (64,66) circulaires, disposées au voisinages des faces frontales, s'écartant en direction radiale vers l'extérieure, par rapport à l'enveloppe extérieure, le joint d'étanchéité étant maintenu en direction radiale exclusivement par les nervures d'appui (64,66), sur une bague d'appui (68), en particulier à peu près cylindrique et en direction axiale au moyen de contre-faces (24,30) coopérant avec les faces d'étanchéité (22,28), caractérisé en ce que du côté (72) radialement intérieur, en observant en direction axiale, une bague intérieure (74) s'étend entre les deux nervures d'appui (64,66) et est placée sous précontrainte sur le joint d'étanchéité (20).

2. Dispositif d'étanchéité selon la revendication 1, caractérisé en ce que les nervures d'appui (64,66) délimitent une gorge périphérique (70) sensiblement en forme de V ou de U.

3. Dispositif d'étanchéité selon la revendication 1 ou 2, caractérisé en ce que le joint d'étanchéité (20) présente, sur la face intérieure (72), une surface pratiquement cylindrique et la bague intérieure (74) est réalisée à peu près sous forme de cylindre creux.

4. Dispositif d'étanchéité selon l'une des revendications 1 à 3, caractérisé en ce que la bague intérieure (74) est élastique.

5. Dispositif d'étanchéité selon la revendication 4, caractérisé en ce que la bague intérieure est une bague élastique (74) fendue.

6. Dispositif d'étanchéité selon l'une des revendications 1 à 5, caractérisé en ce que le joint d'étanchéité (20) présente sur la face intérieure (72) au moins une gorge d'encliquetage (76) ou un ergot d'encliquetage, pour la bague intérieure (74).

7. Dispositif d'étanchéité selon l'une des revendications 1 à 6, caractérisé en ce que les nervures d'appui (64,66) s'étendent sur toute la périphérie du joint d'étanchéité (20), et le joint d'étanchéité (20) délimitant par ses nervures d'appui (64,66) et la bague d'appui (68) une chambre fermée étanche à l'air, remplie d'air, afin de former un coussin d'air comprimable.

8. Utilisation d'un dispositif d'étanchéité selon l'une des revendications 1 à 7 dans un robinet, en particulier dans un robinet à eau.

9. Utilisation selon la revendication 8, le robinet présentant une partie inférieure (12) et une partie supérieure (10) disposée sur celle-ci, avec un disque (30), bloqué en rotation, pourvu d'au moins une ouverture de passage (32), et avec un disque rotatif (36), monté tournant et appuyant sur le disque (30), avec également au moins une ouverture de passage (38), susceptible d'être mise en et hors de chevauchement par rapport à l'ouverture de passage (32) du disque (30), au moyen d'un élément d'actionnement (40), et où le joint d'étanchéité (20) du dispositif d'étanchéité (20,68,74), disposé en amont par rapport au disque (30) lorsqu'on observe le sens d'écoulement (50) du fluide, appuie, par une face d'étanchéité (28), sur le disque (30) et, par une autre face d'étanchéité (22), sur une face d'étanchéité (24) disposée sur la partie inférieure (12).

10. Utilisation selon la revendication 9, caractérisé en ce que le disque (30) et le disque rotatif (36) sont en un matériau céramique.

11. Utilisation selon la revendication 9 ou 10, caractérisé en ce que la face d'étanchéité (24) est réalisée sur un siège de soupape (62) vissé dans la partie inférieure (12).

12. Utilisation selon l'une des revendications 9 à 11, caractérisé en ce que la bague d'appui (68) est réalisée sur la partie supérieure (10) ou la partie inférieure (12).
